# EUROPEAN PATENT APPLICATION

(11) **EP 2 279 661 A1**
(43) Date of publication of application: **02.02.2011**
(21) Application number: 08874264.8
(22) Date of filing: 29.09.2008
(51) Int. Cl.: A01M 31/00, A61D 15/00

(54) **MOUTH PROP FOR ANIMALS**

(30) Priority: 14.05.2008 ES 200801404
(71) Applicant: Herranz De Las Heras, Luis, 28450 Collado Mediano (Madrid) (ES)
(72) Inventor: Herranz De Las Heras, Luis, 28450 Collado Mediano (Madrid) (ES)
(74) Representative: Civanto Villar, Alicia
(86) International application number: PCT/ES2008/000616
(87) International publication number: WO 2009/138527

(57) **Abstract**

The invention relates to a mouth prop for animals, formed by two telescopically connected bodies which can be extended, but not bent. The free ends of the bodies are provided with supporting elements for retaining same in the animal's mouth. The bodies also include complementary racks which can be used to move the bodies in order to extend one body in relation to the other and which prevent bending. The lower end of the inner body is provided with a transverse pin, the ends of which are guided along longitudinal grooves provided on the side surface of the outer body. The bodies can have any polygonal profile.

## Description

### PURPOSE OF THE INVENTION

This invention refers to a mouth prop for animals, basically and specifically designed for its application in the placement and opening of the mouths of dead animals, especially of big game.

The purpose of the invention is to provide a single-use mouth prop, effective in its function, simple and easy to use. It can also have veterinarian application in examinations in the clinic, to hold open the mouths of the animals, or else in outdoor examinations, and due to its special characteristics, it is adequate for animals of different sizes.

### BACKGROUND OF THE INVENTION

There are several means used, in certain cases and circumstances, especially in the field and during hunting activities, to open animals' mouths, being able to cite the classic pliers with curved branches that are applied on the upper and lower palate of the mouth in order to open it. The use of rocks or other elements that are found in the field is also a common practice.

In other cases, elements such as rigid profile in a double "U" shape are used, which adapt to the upper jaw and to the lower jaw of the mouth, permitting it to stay open.

In any case, the known mouth props usually are designed to open the mouth of generally live animals, in order to observe a tooth, or some internal damage to the animal's mouth, etc...

Thus, US patent 4,450,831 refers to a device (speculum) to open the mouth of horses, mules and other animals, which consists of a pair of hooks for the cheeks, adjustable, joined by a strap. There is also US patent 5,718,665 on a speculum for animals, which serves to open the jaw of animals, with a pair of arms, joined together in the shape of a U, and a strap that adjusts to the head of the animal. Moreover, US patent 5,249,569 refers to a device that permits the opening of animals' mouths, consisting of a strap and two parallel bars that can be placed in the animal's mouth in order to facilitate opening it. Finally, patent US patent 6,196,837 describes a device for opening the mouth of animals, which has a long element that is inserted in the animal's mouth, resting on the molars and a strap to hold the device on the head.

All the patents cited refer to devices provided for the opening of live animals' mouths, which permits examining the interior of the mouth or keeping it open in order to administer liquids or medicines.

As it is well known, in big game hunting it is usual to check the teeth of the dead animal, which evidently means having to open the animal's mouth and keep it open to be able to see the corresponding teeth in order to establish, for example, the age of the animal, its development and its qualification for cynegetic purposes.

In any case, the opening of the mouths of these big game animals, once dead, is usually done using sticks, stones, etc., which is not practical; for example, in many occasions there is no stick available of the proper length for opening the mouth, and the teeth can even be damaged by the use of inappropriate means.

### DESCRIPTION OF THE INVENTION

The mouth prop proposed has been conceived to solve the problems expressed above, signifying a simple and very effective solution to opening the mouths of animals dead in big game hunting, in order to keep the mouth of the animal open, which permits, for example, the verification of the teeth.

Basically, the single-use mouth prop is comprised by two bodies coupled together telescopically, which can have a cylindrical, polygonal, or other configuration, as long as one piece is housed inside the other with the ability of being moved, with the special particularity that both pieces have internal serrated tracks that make movement in one direction possible, specifically that of extension, of one pieces with respect to the other, but it prevents from movement in the opposite direction, or, which is the same, it permits expanding or lengthening the mouth prop in order to give it greater length, but impedes the retraction as it expands, and it also permits leaving the mouth prop at the desired length according to the animal being dealt with, or to the size of the mouth in which it must be applied.

Both bodies have a support on the free end so that the mouth prop is positioned correctly with no possibility of moving to one side or the other, preventing the closing of the mouth while checking the animal's teeth.

It can also be highlighted that the axial movement of one element with respect to the other is done by means of a cross pin placed in the internal body of the device and which slides in respective slots prepared for this effect in the external piece, in this way guiding the sliding of one piece with respect to the other.

In this way, is obtained a structurally simple mouth prop, easy to apply and always with the appropriate measurement for each case, with only extending one body away the other of the two that comprise the mouth prop, until reaching the desired length, which will maintain this desired length since the movement in the direction opposite to the expansion or the retraction is made impossible by the configuration of the tracks that both telescopically coupled bodies have for this purpose.

### DESCRIPTION OF THE DRAWINGS

In order to complete the description and for the purpose of show a better understanding of the characteristics of the invention, in accordance with a preferred practical embodiment, a set of drawings is attached as an integral part of this description, where they include but are not limited to the following:

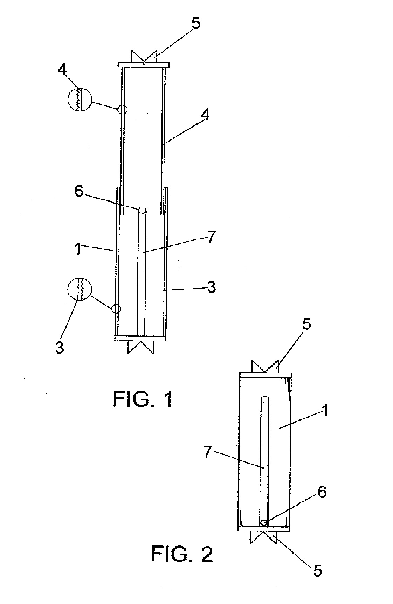

Figure 1: shows a lengthwise cross-section representation of the proposed mouth prop of the invention in the deployed position.
Figure 2: shows a side elevation view of the mouth prop in the folded position.
Figure 3: shows another side elevation view, in this case turned 90° with respect to the previous figure, of the same mouth prop.
Figure 4: shows a practical application of the mouth prop represented in the previous figures, maintaining the mouth of an animal open, for example, that of a wild boar.

### PREFERRED EMBODIMENT OF INVENTION

As can be seen in the referenced figures, the mouth prop of the invention is comprised by the telescopic coupling of two bodies (1 and 2) that can have a circular, cylindrical, polygonal, or other shape, as long as one body can move with respect to the other, with the special particularity that both bodies (1 and 2) are provided with respective track systems (3 and 4), in the first case internal and in the second case external, that fit together so that these tracks (3 and 4) show an inclination of teeth that make possible the movement in the deployed direction, that is, in the direction of lengthening piece (2) with respect to body (1), for example, while waking impossible the movement in the opposite direction, that is, the retracting of both bodies, for which reason the desired length can be made permanent as one body is sliding out from the other.

The external end of both bodies is provided with a support element (5) with the function that will be explained later.

The interior body (1) is provided on its lower end with a cross pin (6) whose ends emerge with respect to the respective slots (7) made in the generating direction, that is, lengthwise, in the external body (2), with the pin (6) comprising as it slides on the slots (7) a guide for the extending movements of the two bodies (1 and 2).

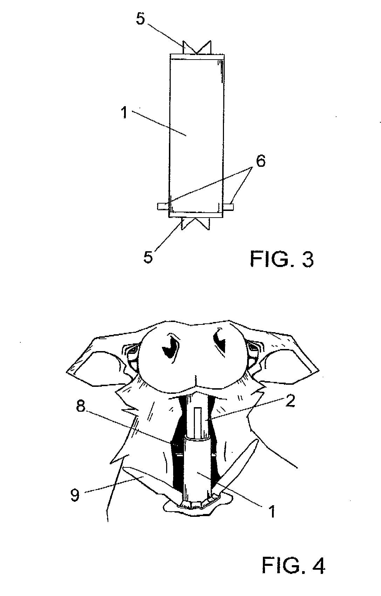

In accordance with the described constitution, the mouth prop in its application in the mouth (8) of an animal, as shown in figure 4, is available initially in a retracted form, with the support (5) of the lower body (2) placed on the lower part of the animal's mouth (8), so that this support (5), by virtue of its configuration in the form of a double spikes, remains held perfectly by these spikes in the lower part of the mouth, so that depending on the size of the mouth the interior body (2) is raised until reaching the corresponding length that permits holding the animal's mouth completely open, in which case the mouth prop is perfectly immobilized at this length by virtue of blocking the movement in the retracting direction of both bodies (1 and 2), as shown in figure 4, permitting the checking of the teeth (9) of the animal.

Because the retracting of the device is not allowed, the mouth prop is of a single use, manufactured in the appropriate material. Its use is very simple and fast, and satisfactorily solves the problems described earlier, avoiding the use of inappropriate means.

## Claims

1. Mouth prop for animals, that being designed for its preferred application in dead big game animals, for the purpose of holding the mouth open and allow checking the teeth of the animal, it is **characterized by** being comprised of two bodies coupled telescopically and with the ability of movement in the extending direction and impeding retraction, bodies that present on their respective free ends sharp supports for sticking into and holding the upper and lower part of the animal's mouth in which it is applied.

2. Mouth prop for animals, according to claim 1, **characterized by** the bodies have respective complementary tracks that make possible the movement in the extending direction of one body with respect to the other and the impossibility of retraction.

3. Mouth prop for animals, according to previous claims, **characterized by** the interior part having on its lower end a cross pin whose ends are guided in respective longitudinal slots made for this purpose in the lateral surface of the external body.

4. Mouth prop for animals, according to previous claims, **characterized by** the bodies are of a cylindrical shape.

5. Mouth prop for animals, according to claims 1 to 3, **characterized by** the bodies being susceptible of having any polygonal shape.

6. Mouth prop for animals, according to previous claims, **characterized by** its application being of single use.
